# EUROPEAN PATENT APPLICATION

(11) **EP 2 937 201 A1**
(43) Date of publication of application: **28.10.2015**
(21) Application number: 14001439.0
(22) Date of filing: 22.04.2014
(51) Int. Cl.: B29C 49/00, B29C 49/42, B29C 49/44, B29C 49/48, B29C 49/62, B29L 31/00, B29K 1/00, B65D 1/02, B65D 81/38, B65D 23/02, B65D 25/14

(54) **A method and a system of producing disposable container from cellulose fibers**

(71) Applicant: Emery Silfurtun Inc, Markham Ontario L3R 2Z5 (CA)
(72) Inventor: Jonsson, Fridrik Ragnar, 101 Reykjavik (IS)
(74) Representative: Reynaldsson, Gudmundur

(57) **Abstract**

This invention relates a method of producing disposable container from cellulose fibers. A wet moulded product having a container like shape is provided and placed into a blow mould defining the shape disposable container, the blow mould having plurality of ventilation openings and is the pre-heated to an operating temperature. A deformable material is placed adjacent or into the blow mould, and a pressure is supplied on the deformable material, the supplied pressure resulting in an inflation of the deformable material into the shape of the blow mould causing evaporation of the moisture in the wet moulded product through the plurality of ventilation openings and simultaneous drying of the wet moulded product into a container like shell structure. The container like shell structure is cooled down a predetermined temperature, and a film of a source material is depositing on an inner surface of the container like shell structure, the pre-determined temperature of the container like shell structure being selected such that it is below a freezing temperature of the source material.

## Description

### FIELD OF THE INVENTION

The present invention relates to a method and a system of producing disposable container from cellulose fibers, and to a disposable container obtained from such a method.

### BACKGROUND OF THE INVENTION

There is a general environmental desire to reduce the amount of waste generated, and to re-use or recycle waste materials where possible. Some development has in the past years been taking place is producing environmental friendly containers.

Coca-Cola^{®} has recently presented a new type of environmental friendly bottles, so-called an ice bottles. These bottles are produced by pouring micro-filtered water into silicone molds which is then frozen to -25°C. Right before handing them to a customer the ice bottles are filled with soda.

The problem with these ice bottles is however that fingers tend to get stuck to the ice bottles. This problem has until now been solved by wrapping each bottle with a material such as branded elastic band. However, the customer may however not necessarily want to end up with such a commercial material after drinking the soda, i.e. the material may in many cases end up as a waste.

More importantly, there is a limited melting time of this "ice bottle" which creates time barrier for the customer from purchasing the bottle filled with e.g. soda until the customer has either put the bottle into freezer or finished the soda in the ice bottle. This time barrier obviously also limits the number of alternative of selling such ice bottles because of the above mentioned time barrier, i.e. it is very unlikely that a customer will be able to purchase such ice bottles in e.g. a supermarket and transport them home into the freezer there, unless the customer is living next to the super market.

### SUMMARY OF THE INVENTION

It would be advantageous to provide an improved alternative to the above mentioned problem that enhances the time barrier from where a customer purchases such a container(s) until the container(s) is/are either stored under appropriate conditions such as freezer or until the customer has finished the beverage in the container(s).

Moreover, the aim of the present invention is to achieve an energy favorable solution of manufacturing such recyclable containers where less energy is needed for the manufacturing.

In general, the invention preferably seeks to mitigate, alleviate or eliminate one or more of the above mentioned disadvantages singly or in any combination. In particular, it may be seen as an object of the present invention to provide a method of producing disposable containers that solves the above mentioned problems, or other problems, of the prior art.

To better address one or more of these concerns, in a first aspect of the invention a method is provided of producing disposable container from cellulose fibers, comprising:
- providing a container like shell structure defining a shape of the disposable container,
- cooling the resulting container like shell structure down below a pre-determined temperature, and
- depositing a film of a source material on an inner surface of the container like shell structure, the pre-determined temperature of the container like shell structure being selected such that it is below a freezing temperature of the source material.

Depositing such a frozen film on the inner side of the container like shell structure enhances the alternatives of selling such recyclable containers with beverages. This is because the time barrier that e.g. a customer has from purchasing a beverage is such a bottle until e.g. putting it into a freezer, or until the beverage in such a container has been finished, is enhanced significantly via the container like shell structure, which acts as an additional barrier, in addition the frozen film on the inner side of the container like shell structure.

Also, this shell structure provides a kind of a protection preventing the customer from sticking his/her fingers on this recyclable "ice-bottle" when such a bottle is used as e.g. a soda bottle or bottle for all types of fluid.

More importantly, the disposable container with such a frozen inner film barrier is fully recyclable.

In one embodiment, the step of providing the container like shell structure comprises:
- providing a wet moulded product having a container like shape,
- placing the wet moulded product into a blow mould defining the shape disposable container, the blow mould comprising plurality of ventilation openings and is the pre-heated to an operating temperature,
- placing a deformable material adjacent or into the blow mould,
- supplying a pressure on the deformable material, the supplied pressure resulting in an inflation of the deformable material into the shape of the blow mould.

The instantly inflation of the deformable material causes an simultaneous pressure onto the wet moulded product towards the blow mould causing an evaporation of the moisture in the wet moulded product through the plurality of ventilation openings and simultaneous drying of the wet moulded product into a container like shell structure.

Surprisingly, such a pressure on the deformable material into the shape of the blow mould while the moulded product is in wet state results in an almost instant evaporation of the moisture from the moulded product through the ventilation holes of the blow mould. This solidifies the moulded product almost instantly such that it forms the outer shell of the container and has the identical shape as inner side of the blow mould. Thus, there is no need to undergo a drying process for the wet moulded product, which takes at least 40 seconds or even more.

The term instantly may according to the present invention mean a time frame around a second or seconds, or even a fraction of a second.

It should be noted that the multiple of such wet moulded products, e.g. tens or hundreds of the wet moulded products mentioned above, may be processed simultaneously into the above mentioned container like shell structure having the above mentioned deposited frozen coating film meaning that the above mentioned disposable container may be produced at a mass production level.

In one embodiment, the source material is water and the step of depositing film comprises depositing is a water film on the inner surface of the container like shell structure. Accordingly, below a freezing temperature of the source material is meant below 0°C, such as below -4°C may be a preferred temperature.

In one embodiment, the operating temperature of the blow mould is in the range of 150-250°C, preferably in the range of 180-220°C.

In one embodiment, the pressure supplied on the deformable material is in the range of 20-80bar, preferably between 30-70bar, more preferably between 40-60bar, most preferably around 50bar.

This should however not be construed as being a limited temperature/pressure ranges.

In one embodiment, the cellulose fibers is selected from: pulp slurry, or paper pulp, or blend of cellulose and Polylactic acid (PLA), or citrus peel fibers, or a mix of two or more thereof.

In one embodiment, the wet moulded product having the container like shape is provided by means of:
- dipping a cellulose fiber mould having a permeable moulding surface side into the cellulose fibers,
- applying a vacuum to the cellulose fiber mould to draw cellulose fibers through the permeable surface side leaving an outwardly or inwardly facing fiber mat on the permeable moulding surface side, and
- removing the cellulose fiber mould from the cellulose fibers and subsequently removing the resulting outwardly or inwardly facing fiber mat from the cellulose fiber mould.

Accordingly, a simple and effective way is provided to produce such a wet moulded product having the container like shape. More importantly, tens or even hundreds of such wet moulded products may be produced simultaneously with the above mentioned method. Thus, the disposable container according to the present invention may be produced at a mass production level where the above mentioned method steps.

The term disposable container may, according to the present invention, mean a bottle or a bottle like structure, where the wet moulded product may have a bottle or bottle like shape.

In one embodiment, the method further comprises a bottling step including filling the disposable container comprising the frozen deposited film with liquid and subsequently sealing the disposable container. The temperature of the liquid is preferably around or below the freezing temperature of the liquid. It is thus ensured that the inner frozen film for the container will not melt.

The above mentioned method may include producing a container like shell structure having a threaded neck portion where the above mentioned sealing includes putting a threaded head onto the threaded neck portion so as to allow a user or a customer to fasten and/or unfasten the threaded head from the threaded neck portion.

Other types of sealing methods of sealing the disposable container such as, but not limited to, attaching a head portion onto the disposable container having the frozen deposited film. Different ways may be provided for attaching the head portion such as, but not limited to, gluing the head portion onto the disposable container.

In one embodiment, the method further comprises providing a moisture resistant covering on the outer surface of the container. This may be particularly beneficial where the container may be left in a wet or damp environment for some time, where there may be a risk of condensation forming on the outside of the container if the container is moved into a warm environment, but in such cases the moisture resistant covering may act as an additional barrier for the container.

In a second aspect of the invention a disposable container is provided comprising an outer container like shell structure and an inner deposited frozen film of a source material adapted to act as a barrier between the material or liquid in the container and the outer container like shell structure, wherein the disposable container is produced by the above mentioned method.

This container may e.g. be a bottle for any types of fluid such as, but not limited to, water, any types of sodas, beers, wine, juices, and any types of milk products.

The container may also include glass shaped products for beverages such as water, sodas, beers, wine, any types of milk products.

In a third aspect of the invention, a system is provided for producing disposable container from cellulose fibers, comprising:
- means for providing a container like shell structure defining a shape of the disposable container,
- a cooling mechanism for cooling the resulting container like shell structure down below a pre-determined temperature, and
- film depositing mechanism for depositing a film of a source material on an inner surface of the container like shell structure, the pre-determined temperature of the container like shell structure being selected such that it is below a freezing temperature of the source material.

A system is thus provided that is capable of producing recyclable container(s) with a frozen film on the inner side of the container like shell structure. This enhances the alternatives of selling such recyclable containers with beverages but, as already addressed, the time barrier that e.g. a customer has from purchasing a beverage is such a container until putting it into a freezer, or until the beverage in such a container has been finished, is enhanced significantly via the container like shell structure that acts as an additional barrier.

Also, the fact that the outer side is a container like shell structure provides a kind of a protection preventing the customer from sticking his/her fingers on this recyclable "ice-bottle" when such a bottle is used as e.g. a soda bottle or bottle for all types of fluid.

More importantly, the disposable container with such a frozen inner film barrier is fully recyclable.

It should be noted that multiple of such wet moulded products, e.g. tens or hundreds of the wet moulded products mentioned above, may be processed into the above mentioned container like shell structure having the above mentioned deposited frozen coating film simultaneously meaning that the above mentioned disposable container may be produced at a mass production level.

In one embodiment, the means for providing the container like shell structure comprises:
- providing means for providing a wet moulded product having a container like shape,
- placing means for placing the wet moulded product into a blow mould defining the shape disposable container, the blow mould comprising plurality of ventilation openings and is the pre-heated to an operating temperature,
- placing means for placing a deformable material adjacent or into the blow mould,
- pressure mechanism for supplying a pressure on the deformable material, the supplied pressure resulting in a inflation of the deformable material into the shape of the blow mould.

The supplied pressure causes thus evaporation of the moisture in the wet moulded product through the plurality of ventilation openings and simultaneous drying of the wet moulded product into a container like shell structure.

The providing means for providing the wet moulded product may be a robotic arm operating the above mentioned cellulose fiber mould having a permeable moulding surface side which, as already addressed, is dipped into cellulose fibers via a movement of the robotic arm. The robotic arm and the cellulose fiber mould may be operable connected to a vacuum source, whereby applying vacuum to the cellulose fiber mould via e.g. the robotic arm, draws the above mentioned cellulose fibers through the permeable surface side leaving an outwardly or inwardly facing fiber mat on the permeable moulding surface side. The robotic arm may subsequently release the outwardly or inwardly facing fiber mat into e.g. the blow mould e.g. by releasing the vacuum pressure, i.e. the robotic arm may act as the above mentioned placing means for placing the wet moulded product into a blow mould.

The placing means for placing a deformable material adjacent or into the blow mould may and the pressure mechanism may also be operated by a robotic arm meaning that the above mentioned steps may be fully automatized.

In one embodiment, the film depositing mechanism comprises a nozzle connected to a source material, the nozzle being adapted to deposit or spray the source material on the inners surface of the container like shell structure causing the deposited to sprayed material to form a frozen film on the inners side of the container like shell structure.

The film depositing mechanism may include plurality of such nozzles where tens or even hundreds of containers with such an inner frozen film barriers is produced at the same time. As already addressed, the source material may be a water source where the inner frozen film is a water film. The thickness of the film may according to the invention be a fraction of millimeters up to several millimeters.

In one embodiment, the system further comprises a bottling system for filling the disposable container comprising the frozen deposited film with liquid. This bottling system may be any type of a bottling system well know in the art that is utilized to fill the disposable container comprising the frozen deposited film with any type of liquid or beverage,

In one embodiment, the system further comprises a sealing system for sealing the disposable container containing the liquid. Any type of sealing system may be utilized to seal the disposable container comprising the frozen deposited film and the liquid.

In one embodiment, the wet moulded product having the container like shape has substantially the same volume and shape as the interior of the blow mould. The blow mould may be made of two (or more) parts such that it may be opened and closed when placing the moulded product when it is in a wet state into the mould. As an example, the blow mould may be made of two or more parts, e.g. the opposite sides of the mould, that are attached together 9 via e.g. a hinge and that may be closed together, they may be moved fully separated away from each other when placing the moulded product therein.

The step of placing the wet moulded product when it is in a wet state into the blow mould may be a manual process, or it may be as already addressed fully automatized process where e.g. robot arms or the like places the wet moulded product into the blow mould.

In general the various aspects of the invention may be combined and coupled in any way possible within the scope of the invention, These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figure 1 shows a flow diagram of a method according to the present invention for producing disposable container from cellulose fibers,
Figure 2 shows a flowchart of on embodiment of a method for manufacturing the wet moulded product discussed in relation to figure 1 having the container like shape,
Figure 3 depicts a system according to the present invention for producing disposable container from cellulose fibers,
Figure 4 shows cross-sectional view of one example of a disposable container according to the present invention comprising an outer container like shell structure and an inner deposited frozen film of a source material adapted to act as a barrier between the material or liquid in the container and the outer container like shell structure, and
Figure 5a-f illustrated graphically the method steps discussed in relation to figure 1.

### DESCRIPTION OF EMBODIMENTS

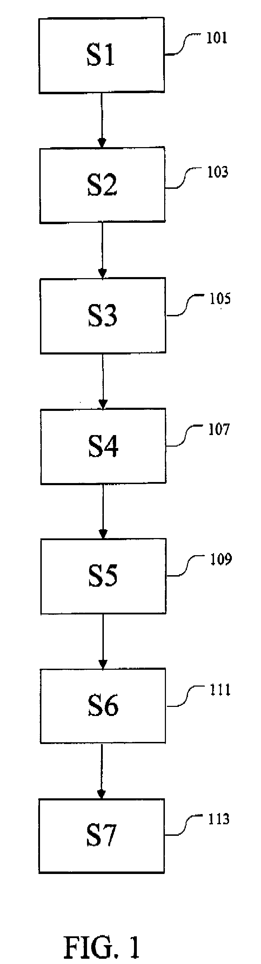

Figure 1 shows a flow diagram of a method according to the present invention for producing disposable container from cellulose fibers. The cellulose fibers may in one embodiment be selected from: pulp slurry, or paper pulp, or Polylactic acid (PLA), or, citrus peel fibers, or a mix of two or more of the above.

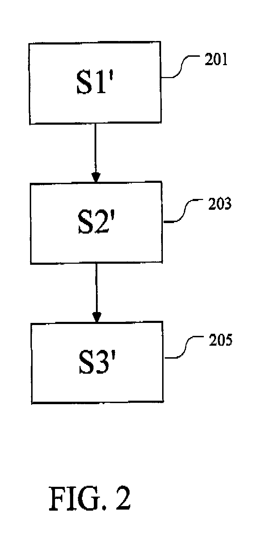

In a first step (S1) 101, a wet moulded product is provided having a container like shape. As will be discussed in more details in relation to figure 2, the step of providing such a wet mouldet product may be achieved in numerious of ways, where e.g. tens or even hundreds of such wet moulded products having a container like shape may be provided simultaneously.

In a second step (S2) 103, the wet moulded product is placed into a blow mould. Preferably, the blow mould defines the shape disposable container, which in this case defines the shape of the container like product, or the final shape of the disposable container. Moreover importantly, the blow mould comprising plurality of ventilation openings and is the pre-heated to an operating temperature via a heating mechanism.

In a third step (S3) 105, a deformable material is placed either adjacent or into the blow mould. This deformable material may be made of any type of material that preferably, via any type of deforming process, reaches its original shape after the deforming process. As an example, such a deformable material may be made of, but is not limited to, any type of rubber type material or latex type of material that may have the elasticity to reach its original shape subsequent to the deforming.

In a fourth step (S4) 107, a pressure is supplied on the deformable material, where the supplied pressure results in an inflation of the deformable material into the shape of the blow mould. This pressure may be in the range of 20-80bar, preferably between 30-70bar, more preferably between 40-60bar, most preferably around 50bar.

Also, the fact that the blow mould is preheated, which may be, but is not limited to, in the range of 150-250°C, preferably in the range of 180-220°C, causes an almost instant evaporation of the moisture in the wet moulded product through the plurality of ventilation openings. Thus, within seconds or a fraction of a second the wet moulded product becomes dried and becomes a container like shell structure.

In a fifth step (S5) 109, the resulting container like shell structure is cooled down below a pre-determined temperature.

In a sixth step (S6) 111, a film of a source material is deposited on an inner side surface of the container like shell structure. The fact that the container like shell structure is cooled down below a pre-determined temperature results in that the film deposited on the inner side surface will frozen inner film adapted to act as a barrier, in addition to the container like shell structure, between the content, e.g. any type of beverages, in the container and the surroundings. A typical source material would be water and where the film is a water film. The pre-determined temperature of the container like shell structure may be selected such that it is sufficiently below the freezing temperature, such as below -4°C or even lower.

In one embodiment, the present invention may further comprise step (S7) 113, a bottling step, where the disposable container comprising the frozen deposited film is filled with liquid and where the disposable container is subsequently sealed.

It should be noted that the above mentioned method steps may be performed on tens or even hundreds of wet moulded products at the same time resulting in tens or hundreds of the above mentioned disposable container comprising the frozen deposited film.

The thickness of the film of source material may in one embodiment be fully controllable depending e.g. on the type of material to be put into the disposable container. As an example, if the disposable container is a soda bottle to be served e.g. from a bar where a customer will within few minutes drink the soda, a thinner film may be utilized compared to if the disposable container comprising the frozen deposited film is being purchased by a customer in a supermarket, where longer time will pass until the customer puts the disposable container (e.g. soda bottles) into a freezer. In such cases, the supermarket may order such disposable containers with thicker inner film.

Figure 2 shows a flowchart of on embodiment of a method for manufacturing the wet moulded product discussed in relation to figure 1 having the container like shape,

In step (S1') 201, a cellulose fiber mould having a permeable moulding surface side is dipped into cellulose fibers. As already addressed, the cellulose fibers may be selected from, but is not limited to, pulp slurry, or paper pulp, or Polylactic acid (PLA), or, citrus peel fibers, or a mix of two or more of the above. The cellulose fiber mould may have tens or even hundreds of container like shapes.

In step (S2') 203, a vacuum is applied to the cellulose fiber mould to draw cellulose fibers through the permeable surface side leaving an outwardly or inwardly facing fiber mat on the permeable moulding outer surface side.

In step (S3') 205, the cellulose fiber mould is removed from the cellulose fibers and subsequently the resulting in the moulded product of the pre-defined shape is removed from the cellulose fiber mould. Accordingly, tens or hundreds of wet moulded products having container like shapes may be produced simultaneously within few seconds.

These tens or hundreds of wet moulded products having container like shapes may subsequently be released into tens or hundreds of blow moulds discussed in relation to figure 1, where the method steps in figure 1 may be performed for tens or hundreds of such wet moulded products having container like shape simultaneously.

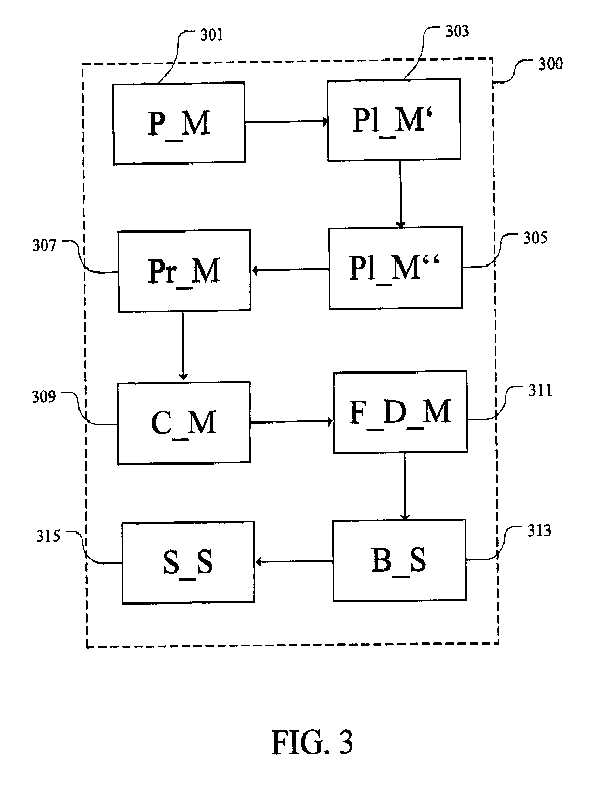

Figure 3 depicts a system 300 according to the present invention for producing disposable container from cellulose fibers.

The system comprises providing means (P_M) 301 for providing a wet moulded product having a container like shape and a placing means (Pl_M') 303 for placing the wet moulded product into a blow mould defining the shape disposable container, where the blow mould comprises plurality of ventilation openings and is the pre-heated to an operating temperature via an appropriate heating mechanism. The providing means (P_M) 301 may e.g. be the above mentioned cellulose fiber mould discussed in relation to figure 2 having the permeable moulding surface side, where e.g. tens or hundreds of wet moulded products may be produced simultaneously. The placing means (Pl_M') 303 may be any type of a lifting mechanism such as a robotic arm or a robotic system that may operate the cellulose fiber mould, i.e. put it into the cellulose fibers and remove it therefrom as discussed in relation to (S3') 205 in figure 2.

The system 300 further comprises a placing means (Pl_M") 305 for placing a deformable material adjacent or into the blow mould. This may be a fully automatized process where e.g. tens or even hundreds of such deformable material which may e.g. have a balloon like shape is placed adjacent or into the blow mould with the wet moulded container like products.

The system 300 further comprises a pressure mechanism (Pr_M) 307 supplies a pressure on the deformable material resulting in a inflation of the deformable material into the shape of the blow mould causing evaporation of the moisture in the wet moulded product through the plurality of ventilation openings and simultaneous drying of the wet moulded product into a container like shell structure. The pressure mechanism (Pr_M) 307 may e.g. comprise a nozzle or plurality of nozzles connected to any type of a pressure source where e.g. a pressurized gas pressure is utilized to inflate the deformable material into the shape of the blow mould. Tens or even hundreds of such deformable material may be utilized simultaneously to produce tens or hundreds of such container like shell structure simultaneously.

The system 300 further comprises a cooling mechanism (C_M) 309 for cooling the resulting container like shell structure down below a pre-determined temperature, and film depositing mechanism (F_D_M) 311 for depositing a film of a source material on an inner surface of the container like shell structure, the pre-determined temperature of the container like shell structure being selected such that it is below a freezing temperature of the source material. The cooling mechanism may as an example be connected to the above mentioned blow mould where the blow mould is subsequently cooled down to the pre-determined temperature via an appropriate cooling mechanism. Accordingly, one and the same blow mould may be used to produce the container like shell structure and to cool the container like shell structure down before depositing the film, e.g. a water film, onto the inner surface of the container like shell structure. The film depositing mechanism (F_D_M) 311 may as an example comprise a nozzle or plurality of nozzles that are connected to the source material such as water source via any connecting means.

The cooling mechanism (C_M) 309 may also comprise a cooling chamber and the like where the container or containers are transported through the cooling chamber where the container or containers are cooled down, and where the film depositing process by the film depositing mechanism (F_D_M) 311 may take place.

The system 300 may in one embodiment further comprise a bottling system (B_S) 313 for filling the disposable container comprising the frozen deposited film with liquid. Any types of bottling systems used in bottling factories may be utilized to bottle/fill the container with any type of liquid or beverage. Moreover, the system may further comprise in one embodiment a sealing system (S_S) 315 for sealing the disposable container containing the liquid. The sealing may e.g. include placing a head portion onto a threaded neck portion of the container like shell structure, assuming that the container like shell structure comprises such a threaded neck portion. Other types of sealing may also be implemented for simple closing the container like shell structure containing the liquid.

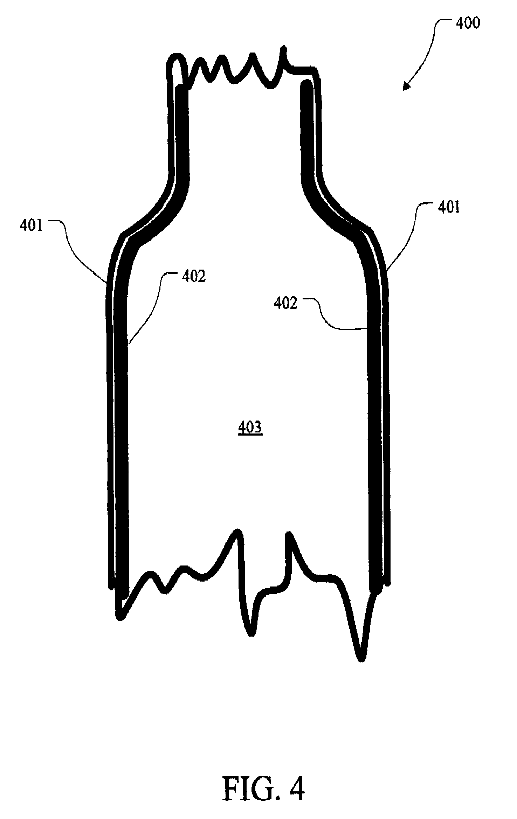

Figure 4 shows cross-sectional view of one example of a disposable container 400 according to the present invention comprising an outer container like shell structure 401 and an inner deposited frozen film 402 of a source material adapted to act as a barrier between the material or liquid in the container and the outer container like shell structure. The source material may e.g. be, but is not limited to, a water source and where the inner deposited frozen film 402 is a water film.

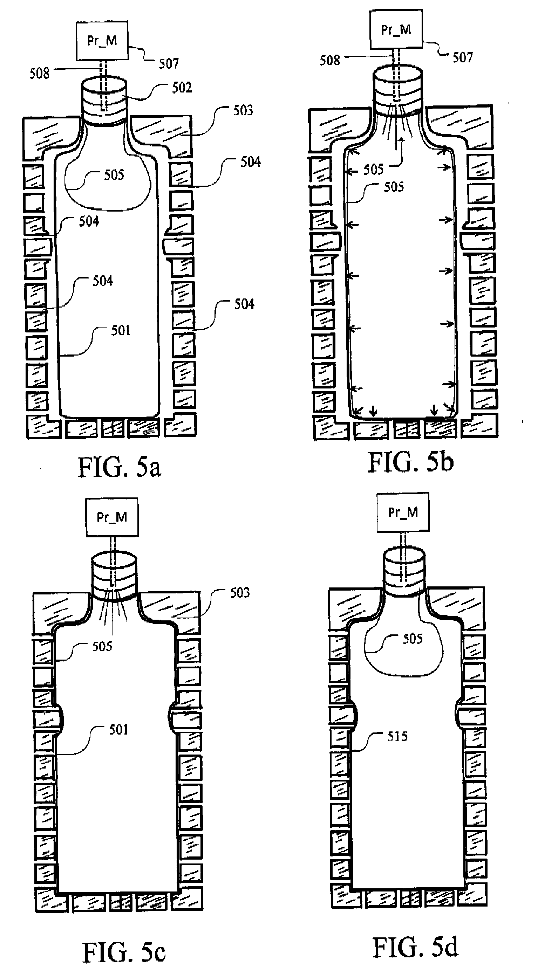

Figure 5a-f illustrated graphically the method steps discussed in relation to figure 1. In this embodiment, it is assumed that the wet moulded product 501 also comprises a neck portion 502 which may e.g. be a threaded neck portion. Also, the neck portion may comprise any type of upwardly protruding portion that may be narrower than the primary part of the wet moulded product 501.

Figure 5a depicts where a deformable material 505 which has a pocket like shape has been placed into a blow mould 503, where the blow mould 503 comprises plurality of ventilation openings 504. The blow mould 503 is pre-heated to an operating temperature which may be, but is not limited to, 150-250°C, preferably in the range of 180-220°C.

A pressure mechanism (Pr_M) 507 is shown comprising a nozzle 508, where the pressure mechanism (Pr_M) 507 is connected to a pressure source (not shown).

Figure 5b depicts where the pressure mechanism (Pr_M) supplies a pressure into the deformable material 505 causing an inflation of the deformable material such that it exerts with a pressure, as indicated by the arrows, onto the wet moulded product The supplied pressure may be a gas pressure in the non-limiting range of 20-80bar, preferably between 30-70bar, more preferably between 40-60bar, most preferably around 50bar.

Figure 5c shows the moment where the deformable material has pressed moulded product into the shape of the inner side of the blow mould.

Figure 5d shows where the supplied pressure has been turned off causing the deformable material 505 to reach its original shape. At this instant, the wet moulded product has turned into a container like shell structure 515, in this case a bottle like structure.

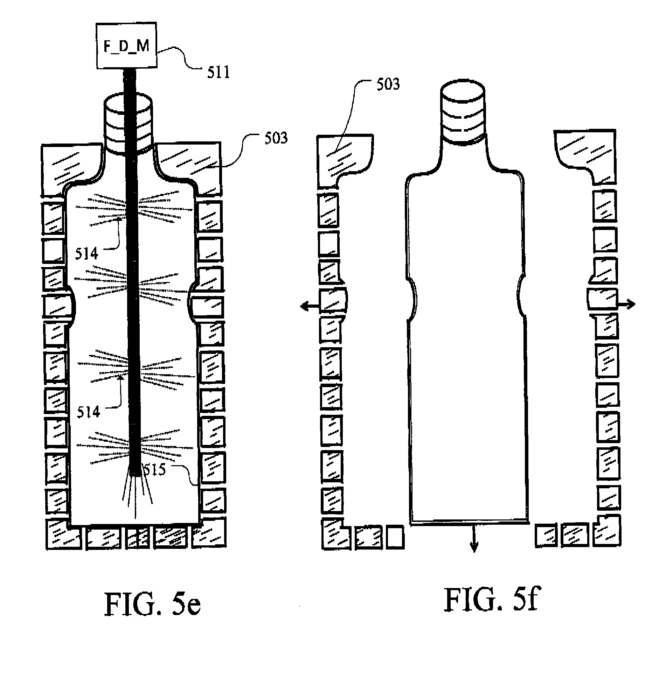

Figure 5e shows where, after cooling the container like shell structure down below a pre-determined temperature, e.g. by cooling the blow mould 503 down a film depositing mechanism (F_D_M) 311 is placed into the container like shell structure for depositing a film of a source material on an inner surface of the container like shell structure. The pre-determined temperature of the container like shell structure is selected such that it is below a freezing temperature of the source material. The source material may e.g. be water, but in such a case the pre-determined temperature is below zero degrees, such as below -4°C or even lower. As depicted here, the film depositing mechanism (F_D_M) 311 may comprise multiple of openings that inject or spray water 514 on the inner side of the container like shell structure 515.

As depicted in figure 5f, the blow mould may be comprise two (or more) parts that may be moved away from each other via an appropriate moving mechanism (not shown here) so as to release the container like shell structure 515 with the frozen film on the inner side from the blow mould.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A method of producing disposable container (400) from cellulose fibers, comprising:
• providing a container like shell structure defining a shape of the disposable container,
• cooling the resulting container like shell structure down below a pre-determined temperature (109), and
• depositing a film of a source material on an inner surface of the container like shell structure, the pre-determined temperature of the container like shell structure being selected such that it is below a freezing temperature of the source material (111).

2. The method according to claim 1, wherein the step of providing the container like shell structure comprises:
• providing a wet moulded product having a container like shape (101),
• placing the wet moulded product into a blow mould defining the shape disposable container, the blow mould comprising plurality of ventilation openings and is the pre-heated to an operating temperature (103),
• placing a deformable material adjacent or into the blow mould (105),
• supplying a pressure on the deformable material, the supplied pressure resulting in an inflation of the deformable material into the shape of the blow mould (107).

3. A method according to claim 1 or 2, wherein the source material is water and the step of depositing film comprises depositing is a water film on the inner surface of the container like shell structure.

4. A method according to any of the preceding claims, wherein the pre-determined temperature of the container like shell structure is below -4°C.

5. A method according to any of the preceding claims, wherein the operating temperature of the blow mould is in the range of 150-250°C, preferably in the range of 180-220°C.

6. A method according to any of the preceding claims, wherein the pressure supplied on the deformable material is in the range of 20-80bar, preferably between 30-70bar, more preferably between 40-60bar, most preferably around 50bar.

7. A method according to any of the preceding claims, wherein the cellulose fibers is selected from: pulp slurry, or paper pulp, or blend of cellulose and Polylactic acid (PLA), or citrus peel fibers, or a mix of two or more thereof.

8. A method according to any of the preceding claims, wherein the wet moulded product having the container like shape is provided by means of:
• dipping a cellulose fiber mould having a permeable moulding surface side into the cellulose fibers (201),
• applying a vacuum to the cellulose fiber mould to draw cellulose fibers through the permeable surface side leaving an outwardly or inwardly facing fiber mat on the permeable moulding outer surface side (203), and
• removing the cellulose fiber mould from the cellulose fibers and subsequently removing the resulting outwardly or inwardly facing fiber mat from the cellulose fiber mould (205).

9. A method according to any of the preceding claims, further comprising a bottling step including filling the disposable container comprising the frozen deposited film with liquid and subsequently sealing the disposable container (113).

10. A method according to claim 9, wherein the temperature of the liquid is around or below the freezing temperature of the liquid.

11. A disposable container comprising an outer container like shell structure and an inner deposited frozen film of a source material adapted to act as a barrier between the material or liquid in the container and the outer container like shell structure, wherein the disposable container is produced by a method according to any of the claims 1-10.

12. A system (300) for producing disposable container from cellulose fibers, comprising:
• means for providing a container like shell structure defining a shape of the disposable container,
• a cooling mechanism (C_M) 309 for cooling the resulting container like shell structure down below a pre-determined temperature, and
• film depositing mechanism (F_D_M) 311 for depositing a film of a source material on an inner surface of the container like shell structure, the pre-determined temperature of the container like shell structure being selected such that it is below a freezing temperature of the source material.

13. The system according to claim 12, wherein the means for providing the container like shell structure comprises:
• providing means (P_M) 301 for providing a wet moulded product having a container like shape,
• placing means (Pl_M') 303 for placing the wet moulded product into a blow mould defining the shape disposable container, the blow mould comprising plurality of ventilation openings and is the pre-heated to an operating temperature,
• placing means (Pl_M") 305 for placing a deformable material adjacent or into the blow mould,
• pressure mechanism (Pr_M) 307 for supplying a pressure on the deformable material, the supplied pressure resulting in a inflation of the deformable material into the shape of the blow mould.

14. A system according to claim 12 or 13, wherein the film depositing mechanism comprises a nozzle connected to a source material, the nozzle being adapted to deposit or spray the source material on the inners surface of the container like shell structure causing the deposited to sprayed material to form a frozen film on the inners side of the container like shell structure.

15. A system according to any of the claims 12 to 14, further comprising a bottling system (B_S) 313 for filling the disposable container comprising the frozen deposited film with liquid and/or further comprising a sealing system (S_S) 315 for sealing the disposable container containing a liquid, or the liquid filled by the bottling system (B_S) 313.
